(19) Europäisches Patentamt
European Patent Office
Office européen des brevets

(11) EP 4 039 504 B1

(12) EUROPEAN PATENT SPECIFICATION

(45) Date of publication and mention of the grant of the patent:
**25.10.2023 Bulletin 2023/43**

(21) Application number: **22151027.4**

(22) Date of filing: **11.01.2022**

(51) International Patent Classification (IPC):
***B60C 1/00*** *(2006.01)* ***C08L 9/06*** *(2006.01)*
*B60C 11/00* *(2006.01)*

(52) Cooperative Patent Classification (CPC):
(C-Sets available)
**C08L 9/06; B60C 1/0016;** B60C 11/005 (Cont.)

# (54) RUBBER COMPOSITION AND TIRE

KAUTSCHUKZUSAMMENSETZUNG UND REIFEN

COMPOSITION DE CAOUTCHOUC ET PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.02.2021 JP 2021018873**

(43) Date of publication of application:
**10.08.2022 Bulletin 2022/32**

(73) Proprietor: **Sumitomo Rubber Industries, Ltd.**
**Kobe-shi, Hyogo-ken 651-0072 (JP)**

(72) Inventors:
- **KAJITA, Hisataka**
  **Kobe-shi, Hyogo, 651-0072 (JP)**
- **YOKOYAMA, Yuka**
  **Kobe-shi, Hyogo, 651-0072 (JP)**
- **ISHINO, Soh**
  **Kobe-shi, Hyogo, 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 2 974 884**
**EP-A1- 3 228 659**
**WO-A1-2014/178431**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 9/06, C08L 9/00, C08L 7/00, C08L 45/00, C08L 91/00, C08K 3/36, C08K 3/04, C08K 5/548, C08K 5/09, C08K 3/22, C08K 3/06, C08K 5/47, C08K 5/18**

**Description**

TECHNICAL FIELD

The present disclosure relates to a rubber composition and a tire.

BACKGROUND ART

It has been proposed for tires to contain a large amount of silica in order to enhance abrasion resistance and wet performance. However, such techniques have a processability problem, a problem with rubber strength due to insufficient silica dispersion, or other problems, and leave room for improvement.

SUMMARY OF DISCLOSURE

TECHNICAL PROBLEM

Hence, for example, if a large amount of plasticizer such as oil or resin is incorporated to enhance processability or silica dispersion, a new problem occurs in that the rubber composition as a whole has higher Tg and tan $\delta$, resulting in deteriorated fuel economy, or that as the incorporation of plasticizer increases, its precipitation from the rubber components increases, degrading the rubber components.

The present disclosure aims to solve the problems and provide a rubber composition and a tire which provide improved overall performance in terms of abrasion resistance, rubber strength, wet grip performance, high-speed wet grip performance, and fuel economy.

SOLUTION TO PROBLEM

The present disclosure relates to a tire, including a rubber composition containing a modified polymer extended rubber, the modified polymer extended rubber being obtained by extending a rubber component A with at least one modified polymer selected from the group consisting of a modified resin containing a functional group having affinity for silica and a modified thermoplastic elastomer containing a functional group having affinity for silica.

ADVANTAGEOUS EFFECTS OF DISCLOSURE

The rubber composition of the present disclosure contains a modified polymer extended rubber obtained by extending a rubber component A with at least one modified polymer selected from the group consisting of a modified resin containing a functional group having affinity for silica and a modified thermoplastic elastomer containing a functional group having affinity for silica. Thus, the rubber composition provides improved overall performance in terms of abrasion resistance, rubber strength, wet grip performance, high-speed wet grip performance, and fuel economy.

BRIEF DESCRIPTION OF DRAWINGS

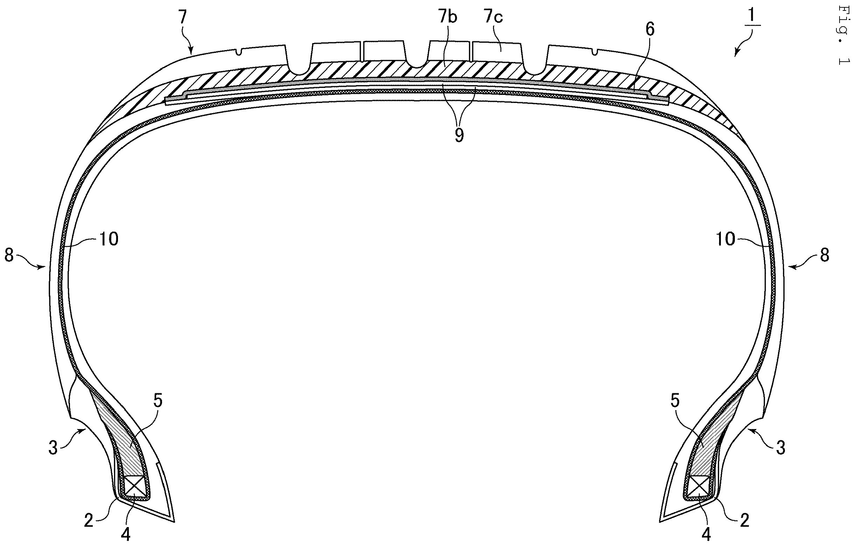

Fig. 1 illustrates a cross-sectional view of a part of a passenger vehicle tire according to one embodiment of the present disclosure.

DESCRIPTION OF EMBODIMENTS

The rubber composition of the present disclosure contains a modified polymer extended rubber obtained by extending a rubber component A with at least one modified polymer selected from the group consisting of a modified resin containing a functional group having affinity for silica and a modified thermoplastic elastomer containing a functional group having affinity for silica. The use of the modified polymer extended rubber improves the overall performance in terms of abrasion resistance, rubber strength, wet grip performance, high-speed wet grip performance, and fuel economy.

The mechanism for this advantageous effect is not clear but is believed as follows.

The addition of a plasticizer such as oil for enhancing rubber processability may cause a reduction in abrasion resistance or wet grip performance. When a modified resin or modified thermoplastic elastomer containing a functional group having affinity for silica is mixed with rubbers in a usual kneading step to prevent the above problem, the functional group interactive with silica (= hydrophilic functional group) acts to inhibit dispersion of the modified resin or modified thermoplastic elastomer in the rubbers. In contrast, it is considered that the above-mentioned condition is less likely to occur with a rubber previously extended with the modified resin or modified thermoplastic elastomer, and therefore silica

can be well dispersed by the action of the modifier group during the kneading step. Accordingly, it is believed that the use of the modified polymer extended rubber improves the overall performance in terms of abrasion resistance, rubber strength, wet grip performance, high-speed wet grip performance, and fuel economy.

[Modified polymer extended rubber]

The modified polymer extended rubber is obtained by extending a rubber component A with at least one modified polymer selected from the group consisting of a modified resin containing a functional group having affinity for silica and a modified thermoplastic elastomer containing a functional group having affinity for silica. Herein, the term "affinity for silica" is defined to collectively mean a nature capable of forming a covalent bond or an intermolecular force weaker than a covalent bond (electromagnetic force between molecules such as ion-dipole interaction, dipole-dipole interaction, hydrogen bond, van der Waals force, or ion bond) between the functional group and the surface of silica.

(Modified polymer of modified polymer extended rubber)

As to the at least one modified polymer selected from the group consisting of a modified resin containing a functional group having affinity for silica and a modified thermoplastic elastomer containing a functional group having affinity for silica, the backbone resin of the modified resin containing a functional group having affinity for silica is not limited and may be a known resin. Suitable examples of the resin include thermoplastic resins such as $C_5$ resins, $C_5/C_9$ resins, $C_9$ resins, terpene resins, terpene-aromatic compound resins, rosin resins, dicyclopentadiene (DCPD) resins, and alkylphenol resins.

The $C_5$ resins include $C_5$ synthetic petroleum resins such as aliphatic petroleum resins obtained by polymerizing a $C_5$ fraction produced by thermal cracking of naphtha in the petrochemical industry, in the presence of a Friedel-Crafts catalyst such as $AlCl_3$ or $BF_3$. The $C_5$ fraction usually contains olefinic hydrocarbons such as 1-pentene, 2-pentene, 2-methyl-1-butene, 2-methyl-2-butene, and 3-methyl-1-butene; diolefinic hydrocarbons such as 2-methyl-1,3-butadiene, 1,2-pentadiene, 1,3-pentadiene, and 3-methyl-1,2-butadiene; and other components. The $C_5$ resins may be commercially available products such as T-REZ RA100 (Tonen Chemical Corporation), ESCOREZ 1000 series (ExxonMobil Chemical), and QUINTONE 100 series A100, B170, M100, and R100 (Zeon Corporation).

The $C_5/C_9$ resins include $C_5/C_9$ synthetic petroleum resins such as solid polymers obtained by polymerizing $C_5$ and $C_9$ fractions derived from petroleum in the presence of a Friedel-Crafts catalyst such as $AlCl_3$ or $BF_3$. Specific examples include copolymers mainly containing components such as styrene, vinyltoluene, $\alpha$-methylstyrene, and indene. The $C_5/C_9$ resins may be commercially available products such as T-REZ RD104 (Tonen Chemical Corporation), ECR213 (ExxonMobil Chemical), and QUINTONE G100B (Zeon Corporation).

The $C_9$ resins include resins polymerized from a $C_9$ fraction obtained as a byproduct of thermal cracking of naphtha in the petrochemical industry together with petrochemical basic raw materials such as ethylene and propylene, i.e., from C9 aromatic compounds including vinyltoluene, alkylstyrenes, and indene as main monomers. Specific examples of the $C_9$ fraction include vinyltoluene, $\alpha$-methylstyrene, $\beta$-methylstyrene, $\gamma$-methylstyrene, o-methylstyrene, p-methylstyrene, and indene. The $C_9$ resins may be produced from the $C_9$ fraction together with other raw materials such as a $C_8$ fraction including styrene, a $C_{10}$ fraction including methylindene and 1,3-dimethylstyrene, or even naphthalene, vinylnaphthalene, vinylanthracene, or p-tert-butylstyrene by copolymerizing them as a mixture using a Friedel-Crafts catalyst, for example. The $C_9$ resins may be commercially available and examples of such $C_9$ petroleum resins include Nisseki Neopolymer L-90, Nisseki Neopolymer 120, Nisseki Neopolymer 130, and Nisseki Neopolymer 140 (ENEOS Corporation).

The terpene resins include solid resins obtained by adding turpentine oil obtained simultaneously in the collection of rosin from *Pinus* trees, or a polymerizable component separated from the turpentine oil, and polymerizing it in the presence of a Friedel-Crafts catalyst. Specific examples include $\beta$-pinene resins and $\alpha$-pinene resins. The terpene resins may be commercially available products such as YS resin series (Yasuhara Chemical Co., Ltd.) and Pyccolyte series such as A115 and S115 (Hercules Corporation).

Typical examples of the terpene-aromatic compound resins include terpene-phenol resins. The terpene-phenol resins may be obtained by reacting a terpene with various phenols in the presence of a Friedel-Crafts catalyst, optionally followed by condensation with formalin. Any terpene may be used as a raw material. Monoterpene hydrocarbons such as $\alpha$-pinene and limonene are preferred. It is more preferred to contain $\alpha$-pinene. The terpene-aromatic compound resins may be commercially available products such as YS POLYSTER U series, YS POLYSTER T series, YS POLYSTER S series, YS POLYSTER G series, YS POLYSTER N series, YS POLYSTER K series, and YS POLYSTER TH series (Yasuhara Chemical Co., Ltd.), and Tamanol 803L and Tamanol 901 (Arakawa Chemical Industries, Ltd.).

The rosin resins include natural resins mainly containing rosin acids (abietic acid, palustric acid, isopimaric acid, etc.) left as residues after distillation of turpentine essential oil from balsams collected from pine resin (the sap of Pinaceae plants) or other sources; and modified or hydrogenated resins obtained by processing the natural resins, e.g.,

through modification or hydrogenation. Specific examples include natural resin rosins and polymerized or partially hydrogenated rosins thereof; glycerol ester rosins and partially hydrogenated, fully hydrogenated, or polymerized rosins thereof; and pentaerythritol ester rosins and partially hydrogenated or polymerized rosins thereof. Examples of the natural resin rosins include gum rosin, tall oil rosin, and wood rosin contained in crude pine resin or tall oil. The rosin resins may be commercially available products such as Polypel and Pentalyn C (Eastman Chemical Company), Lime Resin No.1, Pensel A, and Pensel AD (Arakawa Chemical Industries, Ltd.), Neotoll 105 (Harima Chemicals Group, Inc.), SN Tack 754 (San Nopco Limited), and Hirosin S (iREC Co., Ltd.).

The dicyclopentadiene resins include resins obtained by polymerizing dicyclopentadiene in the presence of a Friedel-Crafts catalyst such as $AlCl_3$ or $BF_3$. The dicyclopentadiene resins may be commercially available products such as Marukarez M-890A (Maruzen Petrochemical Co., Ltd.) and QUINTONE 1920 and QUINTONE 1105 (Zeon Corporation).

The alkylphenol resins include those produced by condensation of an alkylphenol with formaldehyde in the presence of a catalyst. The alkylphenol resins may be commercially available products such as Tackirol 201 (alkylphenol formaldehyde resin, Taoka Chemical Co., Ltd.), Tackirol 250-1 (brominated alkylphenol formaldehyde resin, Taoka Chemical Co., Ltd.), Tackirol 250-III (brominated alkylphenol formaldehyde resin, Taoka Chemical Co., Ltd.), Hitanol 1502P (alkylphenol formaldehyde resin, Hitachi Chemical Co., Ltd.), and R7521P, SP1068, R7510PJ, R7572P, and R7578P (SI GROUP INC.).

The softening point of the resin (backbone resin of the modified resin) is preferably 20°C or higher, more preferably 25°C or higher, still more preferably 40°C or higher, particularly preferably 70°C or higher. The softening point is also preferably 160°C or lower, more preferably 150°C or lower, still more preferably 130°C or lower.

Herein, the softening point is determined as set forth in JIS K 6220-1:2001 using a ring and ball softening point measuring apparatus and defined as the temperature at which the ball drops down.

As to the at least one modified polymer selected from the group consisting of a modified resin containing a functional group having affinity for silica and a modified thermoplastic elastomer containing a functional group having affinity for silica, the backbone thermoplastic elastomer of the modified thermoplastic elastomer containing a functional group having affinity for silica is not limited and may be a known thermoplastic elastomer.

Examples of the thermoplastic elastomer include olefin thermoplastic elastomers, styrene thermoplastic elastomers, vinyl chloride thermoplastic elastomers, urethane thermoplastic elastomers, polyamide thermoplastic elastomers, polyester thermoplastic elastomers, and fluorinated thermoplastic elastomers. These may be used alone or in combinations of two or more. From the standpoint of the overall performance in terms of abrasion resistance, rubber strength, wet grip performance, high-speed wet grip performance, and fuel economy, styrene thermoplastic elastomers are preferred among these.

From the standpoint of the overall performance in terms of abrasion resistance, rubber strength, wet grip performance, high-speed wet grip performance, and fuel economy, the backbone thermoplastic elastomer of the modified thermoplastic elastomer preferably has an aromatic vinyl monomer block. Examples of the aromatic vinyl monomer include styrene, $\alpha$-methylstyrene, vinyltoluene, vinylnaphthalene, divinylbenzene, trivinylbenzene, and divinylnaphthalene. Each of these may be used alone, or two or more of these may be used in combination. Styrene is preferred among these.

The styrene thermoplastic elastomers include those having at least one hard segment containing a styrene unit and at least one soft segment. The hard segment may be a thermoplastic polymer block, and the soft segment may be an elastomeric polymer block. The hard and soft segments may be in a linear, star, or branched configuration.

The styrene hard segment in the styrene thermoplastic elastomers suitably has a glass transition temperature (Tg) of 80°C or higher. For example, the styrene hard segment is preferably a polystyrene.

Examples of the styrene hard segment include homopolymers of styrene monomers; block or random copolymers of multiple styrene monomers; and copolymers of one or more styrene monomers and one or more non-styrene monomers (e.g., 1,3-dienes).

Herein, the styrene monomers may be either styrene or substituted styrenes. Examples of the substituted styrenes include methylstyrenes (o-methylstyrene, m-methylstyrene, p-methylstyrene, $\alpha$-methylstyrene, $\alpha$,2-dimethylstyrene, $\alpha$,4-dimethylstyrene, diphenylethylene, etc.), p-(tert-butyl)styrene, chlorostyrenes (o-chlorostyrene, m-chlorostyrene, p-chlorostyrene, 2,4-dichlorostyrene, 2,6-dichlorostyrene, 2,4,6-trichlorostyrene, etc.), bromostyrenes (o-bromostyrene, m-bromostyrene, p-bromostyrene, 2,4-dibromostyrene, 2,6-dibromostyrene, 2,4,6-tribromostyrene, etc.), fluorostyrenes (o-fluorostyrene, m-fluorostyrene, p-fluorostyrene, 2,4-difluorostyrene, 2,6-difluorostyrene, 2,4,6-trifluorostyrene, etc.), and p-hydroxystyrene.

As to the styrene thermoplastic elastomers, the amount of conjugated diene units (also referred to as conjugated diene monomer units) based on 100% by mass of the styrene thermoplastic elastomer is preferably 20% by mass or more, more preferably 25% by mass or more, still more preferably 30% by mass or more. The upper limit of the amount is preferably 98% by mass or less, more preferably 95% by mass or less, still more preferably 93% by mass or less. The conjugated diene units include at least one diene soft segment which may be fully or partially hydrogenated.

Examples of the diene segment include homopolymers of conjugated dienes; block or random copolymers of multiple conjugated dienes; and copolymers of one or more conjugated dienes and one or more other non-diene monomers (e.g., styrene monomers).

The amount of the conjugated diene units constituting the diene soft segment based on 100% by mass of the diene soft segment is preferably 50% by mass or more, more preferably 60% by mass or more, still more preferably 70% by mass or more, particularly preferably 80% by mass or more.

Examples of the conjugated diene units include 1,3-butadiene and isoprene units. Thus, examples of the diene segment include polybutadienes, polyisoprenes, and copolymers of 1,3-butadiene and isoprene. The copolymers of 1,3-butadiene and isoprene may be either block or random copolymers.

Examples of the styrene thermoplastic elastomers include diblocks consisting of a single diene soft segment and a single styrene hard segment. Examples of such diblocks consisting of a single diene soft segment and a single styrene hard segment include styrene-butadiene (SB) block copolymers, styrene-isoprene (SI) block copolymers, styrene-butadiene-isoprene (SBI) block copolymers, and mixtures of these copolymers. Here, the diene soft segment block may be either a random or block copolymer.

Suitable examples of the styrene thermoplastic elastomers include styrene thermoplastic elastomers having two or more styrene hard segments. Examples of the styrene thermoplastic elastomers having two or more styrene hard segments include those having a styrene hard segment at at least two chain ends in which the styrene hard segments are bound via at least one diene soft segment as described above. Among the styrene thermoplastic elastomers, triblocks having two or more styrene hard segments are preferred. These triblocks may consist of two styrene hard segments and one diene soft segment.

Examples of the triblocks consisting of two styrene hard segments and one diene soft segment include styrene-butadiene-styrene (SBS) block copolymers, styrene-isoprene-styrene (SIS) block copolymers, styrene-butadiene-isoprene-styrene (SBIS) block copolymers, and mixtures of these copolymers. Here, the diene soft segment block may be either a random or block copolymer. Preferred among the foregoing are SIS block copolymers, SBIS block copolymers, and mixtures of these copolymers, with SIS block copolymers being more preferred.

The styrene thermoplastic elastomers may be those in which the conjugated diene units of the diene soft segment are partially or fully hydrogenated. Styrene thermoplastic elastomers may be equally used in which some double bonds in the conjugated diene units of the diene soft segment are reduced to single bonds by techniques other than hydrogenation. The double bonds in the conjugated diene units may be reduced to single bonds, for example, by using a hydrogenated aluminum or a diimine.

With regard to the styrene thermoplastic elastomers in which the conjugated diene units of the diene soft segment are partially or fully hydrogenated, examples of hydrogenated diblocks consisting of a single diene soft segment and a single styrene hard segment include styrene-ethylene-butylene (SEB) block copolymers, styrene-ethylene-propylene (SEP) block copolymers, styrene-ethylene-ethylene-propylene (SEEP) block copolymers, and mixtures of these copolymers. Here, the (hydrogenated) diene soft segment block may be either a random or block copolymer.

With regard to the styrene thermoplastic elastomers in which the conjugated diene units of the diene soft segment are partially or fully hydrogenated, examples of hydrogenated triblocks consisting of two styrene hard segments and one diene soft segment include styrene-ethylene-butylene-styrene (SEBS) block copolymers, styrene-ethylene-propylene-styrene (SEPS) block copolymers, styrene-ethylene-ethylene-propylene-styrene (SEEPS) block copolymers, and mixtures of these copolymers. Here, the (hydrogenated) diene soft segment block may be either a random or block copolymer.

The number average molecular weight (Mn) of the styrene thermoplastic elastomers is preferably 50,000 or more, more preferably 60,000 or more, still more preferably 80,000 or more, particularly preferably 100,000 or more. The upper limit is preferably 500,000 or less, more preferably 450,000 or less, still more preferably 300,000 or less, particularly preferably 250,000 or less. When the Mn is within the range indicated above, the advantageous effect tends to be better achieved.

Herein, the Mn of polymers may be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

The functional group having affinity for silica in the modified resin or thermoplastic elastomer containing a functional group having affinity for silica may be any functional group having affinity for silica. Suitable examples of the functional group having affinity for silica include functional groups containing at least one element selected from the group consisting of oxygen, silicon, sulfur, and nitrogen.

Specific examples of the functional group having affinity for silica include a group represented by SiOR (R represents a hydrogen atom or a hydrocarbon group), an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile

group, a pyridyl group, an alkoxy group, a hydroxy group, an oxy group, and an epoxy group. These functional groups may be substituted. One type or two or more types of these functional groups may be used.

From the standpoint of the overall performance in terms of abrasion resistance, rubber strength, wet grip performance, high-speed wet grip performance, and fuel economy, a group represented by SiOR (R represents a hydrogen atom or a hydrocarbon group), an alkoxysilyl group, an amino group, a hydroxy group, an epoxy group, and a carboxyl group, each of which may be substituted, are preferred among these.

Examples of the group represented by SiOR include SiOH and SiOR (R represents a hydrocarbon group). The hydrocarbon group as R preferably has 1 to 12 carbon atoms, more preferably 1 to 6 carbon atoms, still more preferably 1 to 4 carbon atoms. The hydrocarbon group may be linear, branched, or cyclic. Examples of the hydrocarbon group as R include alkyl groups such as a methyl group, an ethyl group, a n-propyl group, an isopropyl group, a n-butyl group, an iso-butyl group, a sec-butyl group, a tert-butyl group, a pentyl group, and a hexyl group.

The alkoxysilyl group may be a group represented by - $Si(OR^1)_k(R^2)_{3-k}$ wherein $R^1$ and $R^2$ may be the same or different and each represent a hydrogen atom or a hydrocarbon group, and k represents an integer of 1, 2, or 3). The hydrocarbon group as $R^1$ or $R^2$ preferably has 1 to 12 carbon atoms, more preferably 1 to 8 carbon atoms, still more preferably 1 to 4 carbon atoms. Specific examples of unsubstituted or substituted alkoxysilyl groups include monoalkoxysilyl groups (a monomethoxysilyl group, a monoethoxysilyl group, a monopropoxysilyl group, a monobutoxysilyl group, etc.), dialkoxysilyl groups (a dimethoxysilyl group, a diethoxysilyl group, a dipropoxysilyl group, a dibutoxysilyl group, etc.), trialkoxysilyl groups (a trimethoxysilyl group, a triethoxysilyl group, a tripropoxysilyl group, a tributoxysilyl group, etc.), a methyldimethoxysilyl group, a methyldiethoxysilyl group, a dimethylethoxysilyl group, and aminoalkoxysilyl groups.

The amino group may be a primary amino group ($-NH_2$), a secondary amino group ($-NHR^{11}$), or a tertiary amino group ($-NR^{12}R^{13}$) wherein $R^{11}$ to $R^{13}$ may each be any organic group and may be joined to form a ring. The amino group may be substituted as described above. $R^{11}$ to $R^{13}$ each preferably have 1 to 12 carbon atoms, more preferably 1 to 6 carbon atoms, still more preferably 1 to 4 carbon atoms. Specific examples of unsubstituted or substituted amino groups include a primary amino group ($-NH_2$), alkylamino groups (mono-$C_{1-4}$ alkylamino groups such as a methylamino group, an ethylamino group, a propylamino group, an isopropylamino group, and a butylamino group), dialkylamino groups (di-$C_{1-4}$ alkylamino groups such as a dimethylamino group, a diethylamino group, a dipropylamino group, a diisopropylamino group, a dibutylamino group, and a methylethylamino group), and alkoxycarbonylamino groups (e.g., $C_{1-6}$ alkoxycarbonylamino groups such as a methoxycarbonylamino group, an isoproxycarbonylamino group, and a tert-butoxycarbonylamino group).

As the functional group, any compound capable of introducing the functional group may be used, and examples include compounds represented by the following formula:

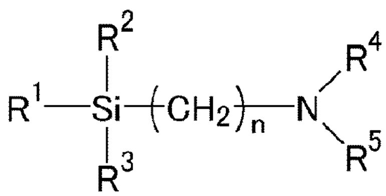

wherein $R^1$, $R^2$, and $R^3$ are the same or different and each represent an alkyl group, an alkoxy group, a silyloxy group, an acetal group, a carboxyl (-COOH) group, or a mercapto (-SH) group, or a derivative thereof; $R^4$ and $R^5$ are the same or different and each represent a hydrogen atom or an alkyl group, and $R^4$ and $R^5$ may be joined to form a ring structure with the nitrogen atom; and n represents an integer.

$R^1$, $R^2$, and $R^3$ may each suitably be an alkoxy group, preferably a C1-C8 alkoxy group, more preferably a C1-C4 alkoxy group. $R^4$ and $R^5$ may each suitably be an alkyl group, preferably a C1-C3 alkyl group. The integer n is preferably 1 to 5, more preferably 2 to 4, still more preferably 3. When $R^4$ and $R^5$ are joined to form a ring structure with the nitrogen atom, the ring structure is preferably a 4- to 8-membered ring. The term "alkoxy group" encompasses cycloalkoxy groups (e.g., a cyclohexyloxy group) and aryloxy groups (e.g., a phenoxy group, a benzyloxy group).

Specific examples of the compounds of the above formula include 3-aminopropyltriethoxysilane, 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. Preferred among these are 3-aminopropyltriethoxysilane, 3-dimethylaminopropyltrimethoxysilane, 3-dimethylaminopropyltriethoxysilane, and 3-diethylaminopropyltrimethoxysilane. These may be used alone or in combinations of two or more.

Other compounds capable of introducing the functional group include:

ethylenically unsaturated silane compounds such as vinyltrimethoxysilane, vinyltriethoxysilane, allyltrimethoxysilane, allyltriethoxysilane, dimethoxymethylvinylsilane, diethoxymethylvinylsilane, p-styryltrimethoxysilane, 3-methacryloxypropylmethyldimethoxysilane, 3-methacryloxypropyltrimethoxysilane, and 3-acryloxypropyltrimethoxysilane;

polyglycidyl ethers of polyhydric alcohols such as ethylene glycol diglycidyl ether, glycerol triglycidyl ether, trimethylolethane triglycidyl ether, and trimethylolpropane triglycidyl ether; polyglycidyl ethers of aromatic compounds having two or more phenol groups such as diglycidylated bisphenol A; polyepoxy compounds such as 1,4-diglycidylbenzene, 1,3,5-triglycidylbenzene, and polyepoxidized liquid polybutadiene; epoxy group-containing tertiary amines such as 4,4'-diglycidyl-diphenylmethylamine and 4,4'-diglycidyl-dibenzylmethylamine; diglycidylamino compounds such as diglycidylaniline, N,N'-diglycidyl-4-glycidyloxyaniline, diglycidylorthotoluidine, tetraglycidyl meta-xylenediamine, tetraglycidylaminodiphenylmethane, tetraglycidyl-p-phenylenediamine, diglycidylaminomethylcyclohexane, and tetraglycidyl-1,3-bisaminomethylcyclohexane;

amino group-containing acid chlorides such as bis(1-methylpropyl)carbamyl chloride, 4-morpholinecarbonyl chloride, 1-pyrrolidinecarbonyl chloride, N,N-dimethylcarbamic acid chloride, and N,N-diethylcarbamic acid chloride;

epoxy group-containing silane compounds such as 1,3-bis(glycidyloxypropyl)-tetramethyldisiloxane and (3-glycidyloxypropyl)-pentamethyldisiloxane;

sulfide group-containing silane compounds such as (trimethylsilyl)[3-(trimethoxysilyl)propyl]sulfide, (trimethylsilyl)[3-(triethoxysilyl)propyl]sulfide, (trimethylsilyl)[3-(tripropoxysilyl)propyl]sulfide, (trimethylsilyl)[3-(tributoxysilyl)propyl]sulfide, (trimethylsilyl)[3-(methyldimethoxysilyl)propyl]sulfide, (trimethylsilyl)[3-(methyldiethoxysilyl)propyl]sulfide, (trimethylsilyl)[3-(methyldipropoxysilyl)propyl]sulfide, and (trimethylsilyl)[3-(methyldibutoxysilyl)propyl] sulfide;

N-substituted aziridine compounds such as ethyleneimine and propyleneimine; alkoxysilanes such as methyltriethoxysilane; (thio)benzophenone compounds containing an amino group and/or a substituted amino group such as 4-N,N-dimethylaminobenzophenone, 4-N,N-di-t-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, and N,N,N',N'-bis(tetraethylamino)benzophenone; benzaldehyde compounds containing an amino group and/or a substituted amino group such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones such as N-methyl-2-piperidone, N-vinyl-2-piperidone, and N-phenyl-2-piperidone; N-substituted lactams such as N-methyl-ε-caprolactam, N-phenyl-ε-caprolactam, N-methyl-ω-laurilolactam, N-vinyl-w-laurilolactam, N-methyl-β-propiolactam, and N-phenyl-β-propiolactam;

N,N-bis(2,3-epoxypropoxy)aniline, 4,4-methylene-bis(N,N-glycidylaniline), tris(2,3-epoxypropyl)-1,3,5-triazine-2,4,6-triones, N,N-diethylacetamide, N-methylmaleimide, N,N-diethylurea, 1,3-dimethylethylene urea, 1,3-divinylethylene urea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, and 1,7-bis(methylethylamino)-4-heptanone;

ethylenediamine, 1,3-propanediamine, 1,4-butanediamine, 1,2-cyclohexanediamine, N-methylethylenediamine, N-methylpropanediamine, N,N-dimethylethylenediamine, N,N-dimethylpropanediamine, N-acetylethylenediamine, and isophoronediamine;

4-N,N-dimethylaminoethylstyrene, 3-N,N-dimethylaminoethylstyrene, 4-N,N-diethylaminoethylstyrene, 3-N,N-diethylaminoethylstyrene, 4-N,N-di-n-propylaminoethylstyrene, 3-N,N-di-n-propylaminoethylstyrene, 4-N,N-di-n-butylaminoethylstyrene, 3-N,N-di-n-butylaminoethylstyrene, 4-N,N-diallylaminoethylstyrene, 3-N,N-diallylaminoethylstyrene, 4-N,N-bis(trimethylsilyl)aminoethylstyrene, 3-N,N-bis(trimethylsilyl)aminoethylstyrene, 4-N,N-bis(tertbutyldimethylsilyl)aminoethylstyrene, 3-N,N-bis(tertbutyldimethylsilyl)aminoethylstyrene, 4-aziridinylethylstyrene, 3-aziridinylethylstyrene, 4-pyrrolidinylethylstyrene, 3-pyrrolidinylethylstyrene, 4-piperidinylethylstyrene, 3-piperidinylethylstyrene, 4-hexamethyleneiminoethylstyrene, and 3-hexamethyleneiminoethylstyrene.

The modified resin or thermoplastic elastomer containing a functional group having affinity for silica as described above can be prepared by known methods. The functional group having affinity for silica may be provided to the backbone resin or thermoplastic elastomer, for example, but not limited to, by copolymerizing a monomer containing the functional group during the polymerization of the resin or thermoplastic elastomer to introduce the functional group into the chain end and/or main chain, or by adding a compound containing the functional group to the polymerized resin or thermoplastic elastomer or a commercially available resin or thermoplastic elastomer to introduce the functional group.

Specific examples include, but not limited to, the following methods (1) to (4).

(1) A compound containing the functional group and having an unsaturated bond is ionically or radically added to the resin or thermoplastic elastomer.

(2) A compound containing the functional group is added to the resin or thermoplastic elastomer by the action of a radical generator such as a peroxide compound.
(3) The resin or thermoplastic elastomer containing a functional group such as a carboxyl or hydroxy group is further reacted with a compound containing the functional group to introduce the target functional group into the resin or thermoplastic elastomer.
(4) A monomer containing the functional group is copolymerized during the polymerization of the resin or thermoplastic elastomer.

(Rubber component A of modified polymer extended rubber)

The rubber component A of the modified polymer extended rubber preferably has a number average molecular weight of 50,000 or more, more preferably 100,000 or more, still more preferably 150,000 or more, particularly preferably 200,000 or more. The lower limit of the number average molecular weight may also be 400,000 or more, or 450,000 or more. The upper limit is preferably 3,000,000 or less, more preferably 2,000,000 or less. When the number average molecular weight is within the range indicated above, the advantageous effect tends to be better achieved.
The rubber component A of the modified polymer extended rubber preferably has a glass transition temperature (Tg) of -10°C or lower, more preferably -20°C or lower, still more preferably -40°C or lower, particularly preferably -45°C or lower. The upper limit of the glass transition temperature may also be -50°C or lower, -55°C or lower, -65°C or lower, -89°C or lower, or - 109°C or lower. The lower limit is not limited but is preferably -130°C or higher, more preferably -120°C or higher.
Herein, the glass transition temperature is measured at a temperature increase rate of 10°C/min using a differential scanning calorimeter (Q200, TA Instruments Japan) in accordance with JIS K 7121.
The rubber component A of the modified polymer extended rubber may be either an unmodified or modified rubber. From the standpoint of the overall performance in terms of abrasion resistance, rubber strength, wet grip performance, high-speed wet grip performance, and fuel economy, the rubber component A is preferably a modified rubber.
The mechanism for this advantageous effect is not clear but is believed as follows.
The rubber component A of the modified polymer extended rubber and the modified polymer, both of which contain a functional group, can strongly interact with silica, thereby improving fuel economy, abrasion resistance, and rubber strength. This is believed to improve the overall performance in terms of abrasion resistance, rubber strength, wet grip performance, high-speed wet grip performance, and fuel economy.
Moreover, since the modified rubber and the modified polymer both contain a functional group and are homogeneously mixed in advance, they are bound to each other by strong interaction, thereby preventing the modified polymer from bleeding. Thus, it is possible to provide a rubber that has a significantly reduced change over time.
The modified rubber may be, for example, a rubber containing a functional group interactive with filler such as silica. Examples include a chain end-modified rubber obtained by modifying at least one chain end of a rubber with a compound (modifier) having the functional group (i.e., a chain end-modified rubber terminated with the functional group); a main chain-modified rubber having the functional group in the main chain; a main chain- and chain end-modified rubber having the functional group in both the main chain and chain end (e.g., a main chain- and chain end-modified rubber in which the main chain has the functional group and at least one chain end is modified with the modifier); and a chain end-modified rubber into which a hydroxy or epoxy group has been introduced by modification (coupling) with a polyfunctional compound having two or more epoxy groups in the molecule.
Examples of the functional group in the modified rubber include the above-mentioned functional groups having affinity for silica. From the standpoint of the overall performance in terms of abrasion resistance, rubber strength, wet grip performance, high-speed wet grip performance, and fuel economy, a group represented by SiOR (R represents a hydrogen atom or a hydrocarbon group), an alkoxysilyl group, an amino group, a hydroxy group, an epoxy group, and a carboxyl group, each of which may be substituted, as described above are preferred among these. Moreover, examples of compounds capable of introducing the functional group include the above-mentioned compounds.
The rubber component A of the modified polymer extended rubber may be, for example, a diene rubber. Examples of the diene rubber include isoprene-based rubbers, polybutadiene rubbers (BR), styrene-butadiene rubbers (SBR), styrene-isoprene-butadiene rubbers (SIBR), ethylene-propylene-diene rubbers (EPDM), chloroprene rubbers (CR), and acrylonitrile butadiene rubbers (NBR). Other examples include butyl-based rubbers and fluororubbers. From the standpoint of the overall performance in terms of abrasion resistance, rubber strength, wet grip performance, high-speed wet grip performance, and fuel economy, SBR, BR, and isoprene-based rubbers are preferred among these, with SBR or BR being more preferred. The diene rubber may be either an unmodified or modified diene rubber as described above, and may also be hydrogenated.
Any SBR may be used, including for example emulsionpolymerized styrene-butadiene rubbers (E-SBR) and solutionpolymerized styrene-butadiene rubbers (S-SBR). These may be used alone or in combinations of two or more.
The styrene content of the SBR is preferably 3% by mass or higher, more preferably 10% by mass or higher,

still more preferably 15% by mass or higher. The styrene content is also preferably 60% by mass or lower, more preferably 40% by mass or lower, still more preferably 30% by mass or lower, particularly preferably 25% by mass or lower. When the styrene content is within the range indicated above, the advantageous effect tends to be better achieved.

Herein, the styrene content of the SBR is determined by $^1$H-NMR.

The vinyl content of the SBR is preferably 5% by mass or higher, more preferably 10% by mass or higher, still more preferably 12% by mass or higher. The vinyl content is preferably 50% by mass or lower, more preferably 30% by mass or lower, still more preferably 25% by mass or lower. When the vinyl content is within the range indicated above, the advantageous effect tends to be better achieved.

The vinyl content (1,2-butadiene unit content) may be measured by infrared absorption spectrometry.

SBR products manufactured or sold by Sumitomo Chemical Co., Ltd., JSR Corporation, Asahi Kasei Corporation, Zeon Corporation, etc. may be used as the SBR.

The SBR may be either unmodified or modified SBR. Examples of the modified SBR include those into which a functional group as described for the modified rubber is introduced. The SBR may be hydrogenated.

Any BR may be used, including for example high-cis BR having high cis contents, BR containing syndiotactic polybutadiene crystals, and BR synthesized using rare earth catalysts (rare earth-catalyzed BR). These may be used alone or in combinations of two or more. To enhance abrasion resistance, high-cis BR having a cis content of 90% by mass or higher is preferred among these.

The BR may be either unmodified or modified BR. Examples of the modified BR include those into which a functional group as described for the modified rubber is introduced. The BR may be hydrogenated.

The BR may be commercially available from Ube Industries, Ltd., JSR Corporation, Asahi Kasei Corporation, Zeon Corporation, etc.

Examples of the isoprene-based rubbers include natural rubbers (NR), polyisoprene rubbers (IR), refined NR, modified NR, and modified IR. Examples of the NR include those commonly used in the rubber industry such as SIR20, RSS#3, and TSR20. Any IR may be used, and examples include those commonly used in the rubber industry such as IR2200. Examples of the refined NR include deproteinized natural rubbers (DPNR) and highly purified natural rubbers (UPNR). Examples of the modified NR include epoxidized natural rubbers (ENR), hydrogenated natural rubbers (HNR), and grafted natural rubbers. Examples of the modified IR include epoxidized polyisoprene rubbers, hydrogenated polyisoprene rubbers, and grafted polyisoprene rubbers. These may be used alone or in combinations of two or more.

The modified polymer extended rubber may be prepared by sufficiently mixing the rubber component A with the modified resin or thermoplastic elastomer containing a functional group having affinity for silica. For example, the modified polymer extended rubber may be obtained by mixing the rubber component A in solution in an organic solvent with the modified resin and/or modified thermoplastic elastomer prepared as a liquid, and optionally collecting the modified polymer extended rubber by a known method.

The organic solvent may be any solvent compatible with the monomers of the rubber component A, the rubber component A, and the modified resin and/or modified thermoplastic elastomer, for example. Suitable organic solvents are aliphatic or alicyclic, and specific examples include n-pentane, isopentane, isoamylene (2-methyl-2-butene, 2-methyl-1-butene, and 3-methyl-1-butene), 2,2-dimethylbutane, 2,2-dimethylpropane (neopentane), n-heptane, n-octane, isooctane, cyclopentane, cyclohexane, n-hexane, methylcyclopentane, and methylcyclohexane, as well as mixtures of the foregoing compounds. Moreover, other organic solvents include aromatic hydrocarbons (e.g., benzene, toluene).

The modified resin and/or modified thermoplastic elastomer prepared as a liquid may be those which are solid at room temperature and which have been subjected to a process to transition into a liquid state. Specifically, the modified resin and/or modified thermoplastic elastomer prepared as a liquid may be those which are heated to a temperature exceeding the softening point thereof by known techniques.

In particular, the modified polymer extended rubber is preferably prepared by producing the rubber component A by polymerization in an organic solvent, and adding a solution of the modified resin and/or the modified thermoplastic elastomer to the resulting polymerization solution. In this case, a modified polymer extended rubber can be suitably prepared in which the rubber component A and the modified polymer are sufficiently mixed. The polymerization in an organic solvent, the preparation of the solution of the modified resin and/or the modified thermoplastic elastomer, and the method of adding the solution of the modified resin and/or the modified thermoplastic elastomer are not limited and may be carried out by appropriate known methods.

The combined amount of the modified resin and the modified thermoplastic elastomer per 100 parts by mass of the rubber component A in the modified polymer extended rubber is preferably 5 parts by mass or more, more preferably 30 parts by mass or more, still more preferably 40 parts by mass or more, particularly preferably 50 parts by mass or more. The upper limit of the combined amount is preferably 100 parts by mass or less, more preferably 70 parts by mass or less, still more preferably 60 parts by mass or less. When the combined amount is within the range indicated above, the advantageous effect tends to be better achieved.

(Total rubber components in rubber composition)

The total rubber components in the rubber composition consist of the rubber component A of the modified polymer extended rubber and a rubber component B that is optionally present in addition to the rubber component A. For example, for a rubber composition that contains a modified polymer extended rubber including a modified SBR and the above-described modified polymer, an unmodified BR, and a filler, the total rubber components in the rubber composition are the modified SBR (corresponding to the rubber component A) and the unmodified BR (corresponding to the rubber component B). Here, the rubber component B may be a rubber known in the rubber industry, and examples include unmodified and modified rubbers as described for the rubber component A of the modified polymer extended rubber.

Herein, the above-described modified thermoplastic elastomers and the above-described thermoplastic elastomers are excluded from the total rubber components in the rubber composition.

The amount of SBR (the combined amount of the SBR in the modified polymer extended rubber and any other SBR contained in addition to the SBR) based on 100% by mass of the total rubber components (100% by mass of the combined amount of the rubber component A and the rubber component B) in the rubber composition is preferably 20% by mass or more, more preferably 25% by mass or more, still more preferably 70% by mass or more. The upper limit is not limited and may be 100% by mass. When the amount is within the range indicated above, the advantageous effect tends to be better achieved.

The amount of BR (the combined amount of the BR in the modified polymer extended rubber and any other BR contained in addition to the BR) based on 100% by mass of the total rubber components in the rubber composition is preferably 20% by mass or more, more preferably 25% by mass or more, still more preferably 30% by mass or more. The upper limit is not limited and may be 100% by mass. When the amount is within the range indicated above, the advantageous effect tends to be better achieved.

The amount of isoprene-based rubbers (the combined amount of the isoprene-based rubbers in the modified polymer extended rubber and any other isoprene-based rubber contained in addition to the isoprene-based rubbers) based on 100% by mass of the total rubber components in the rubber composition is preferably 60% by mass or less, more preferably 50% by mass or less. The lower limit is not limited and may be 3% by mass or more, 5% by mass or more, or 10% by mass or more. When the amount is within the range indicated above, the advantageous effect tends to be better achieved.

The amount of the rubber component A included in the modified polymer extended rubber based on 100% by mass of the total rubber components in the rubber composition is preferably 20% by mass or more, more preferably 40% by mass or more, and may be 100% by mass. When the amount is within the range indicated above, the advantageous effect tends to be better achieved.

(Modified polymers in rubber composition)

Although the rubber composition contains the modified polymer (the modified resin, the modified thermoplastic elastomer), "the modified polymers in the rubber composition" means the total modified polymers as described above contained in the composition. For example, for a rubber composition that contains a modified polymer extended rubber including a modified SBR and the modified resin, the modified resin, and a filler, the modified polymers in the rubber composition are the modified resin of the modified polymer extended rubber and the modified resin separately added.

In the rubber composition, the combined amount of the modified resins and the modified thermoplastic elastomers per 100 parts by mass of the total rubber components (100 parts by mass of the combined amount of the rubber component A and the rubber component B) in the rubber composition is preferably 5 parts by mass or more, more preferably 20 parts by mass or more, still more preferably 30 parts by mass or more, particularly preferably 40 parts by mass or more, most preferably 50 parts by mass or more. The upper limit is preferably 120 parts by mass or less, more preferably 100 parts by mass or less, still more preferably 90 parts by mass or less, particularly preferably 80 parts by mass or less. When the combined amount is within the range indicated above, the advantageous effect tends to be better achieved. Moreover, the same range desirably applies to the amount of the modified resins and the amount of the modified thermoplastic elastomers, each per 100 parts by mass of the total rubber components.

The combined content of the modified resin and the modified thermoplastic elastomer contained in the modified polymer extended rubber based on 100% by mass of the combined amount of the modified resins and the modified thermoplastic elastomers in the rubber composition is preferably 20% by mass or higher, more preferably 25% by mass or higher, still more preferably 50% by mass or higher, and may be 100% by mass. When the combined content is within the range indicated above, the advantageous effect tends to be better achieved.

(Filler)

The rubber composition preferably contains a filler. Examples of the filler include fillers known in the rubber industry, such as inorganic fillers including silica, carbon black, calcium carbonate, talc, alumina, clay, aluminum hydroxide, aluminum oxide, and mica; and poorly dispersible fillers. Silica and carbon black are preferred among these, with silica being more preferred.

In the rubber composition, the total amount of fillers per 100 parts by mass of the total rubber components in the rubber composition is preferably 50 parts by mass or more, more preferably 85 parts by mass or more, still more preferably 105 parts by mass or more, particularly preferably 125 parts by mass or more. The upper limit is preferably 200 parts by mass or less, more preferably 175 parts by mass or less, still more preferably 155 parts by mass or less, particularly preferably 135 parts by mass or less. When the total amount is within the range indicated above, the advantageous effect tends to be better achieved.

Examples of usable silica include dry silica (anhydrous silica) and wet silica (hydrous silica). Wet silica is preferred among these because it contains a large number of silanol groups. The silica may be commercially available from Degussa, Rhodia, Tosoh Silica Corporation, Solvay Japan, Tokuyama Corporation, etc.

The nitrogen adsorption specific surface area ($N_2SA$) of the silica is preferably 70 $m^2/g$ or more, more preferably 140 $m^2/g$ or more, still more preferably 160 $m^2/g$ or more, particularly preferably 180 $m^2/g$ or more. The upper limit of the $N_2SA$ of the silica is not limited but is preferably 300 $m^2/g$ or less, more preferably 275 $m^2/g$ or less, still more preferably 250 $m^2/g$ or less. When the $N_2SA$ is within the range indicated above, the advantageous effect tends to be better achieved.

Herein, the $N_2SA$ of the silica is determined by a BET method in accordance with ASTM D3037-93.

In the rubber composition, the amount of silica per 100 parts by mass of the total rubber components in the rubber composition is preferably 30 parts by mass or more, more preferably 80 parts by mass or more, still more preferably 100 parts by mass or more, particularly preferably 120 parts by mass or more. The upper limit is preferably 200 parts by mass or less, more preferably 170 parts by mass or less, still more preferably 150 parts by mass or less, particularly preferably 130 parts by mass or less. When the amount is within the range indicated above, the advantageous effect tends to be better achieved.

When the rubber composition contains silica, it may contain a silane coupling agent together with the silica. Non-limiting examples of usable silane coupling agents include any silane coupling agent conventionally used with silica in the rubber industry, including: sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from Degussa, Momentive, Shin-Etsu Silicone, Tokyo Chemical Industry Co., Ltd., AZmax. Co., Dow Corning Toray Co., Ltd., etc. These may be used alone or in combinations of two or more. Sulfide or mercapto silane coupling agents are preferred among these.

The amount of silane coupling agents per 100 parts by mass of silica in the rubber composition is preferably 3 parts by mass or more, more preferably 6 parts by mass or more. The amount is also preferably 20 parts by mass or less, more preferably 15 parts by mass or less. When the amount is within the range indicated above, the advantageous effect tends to be better achieved.

Examples of usable carbon black include N134, N110, N220, N234, N219, N339, N330, N326, N351, N550, and N762. These may be used alone or in combinations of two or more. Usable commercial products are available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc.

The nitrogen adsorption specific surface area ($N_2SA$) of the carbon black is preferably 50 $m^2/g$ or more, more preferably 80 $m^2/g$ or more, still more preferably 100 $m^2/g$ or more. The $N_2SA$ is also preferably 200 $m^2/g$ or less, more preferably 150 $m^2/g$ or less, still more preferably 130 $m^2/g$ or less. When the $N_2SA$ is within the range indicated above, the advantageous effect tends to be better achieved.

Herein, the nitrogen adsorption specific surface area of the carbon black can be determined in accordance with JIS K 6217-2:2001.

In the rubber composition, the amount of carbon black per 100 parts by mass of the total rubber components in the rubber composition is preferably 1 part by mass or more, more preferably 3 parts by mass or more, still more preferably 5 parts by mass or more. The upper limit is preferably 30 parts by mass or less, more preferably 20 parts by mass or less, still more preferably 10 parts by mass or less. When the amount is within the range indicated above, the advantageous effect tends to be better achieved.

(Plasticizer)

The rubber composition may contain a plasticizer other than the modified polymer (the modified resin, the modified thermoplastic elastomer) of the modified polymer extended rubber. The term "plasticizer" refers to a material that can impart plasticity to rubber components, and examples include liquid plasticizers (plasticizers that are liquid at room temperature (25°C)) and resins (resins that are solid at room temperature (25°C)). Although the rubber composition contains the modified polymer (the modified resin, the modified thermoplastic elastomer), "plasticizers in the rubber composition" means the total plasticizers contained in the composition. For example, for a rubber composition that contains a modified polymer extended rubber including a modified SBR and the modified resin, an oil, the thermoplastic elastomer, and a filler, the plasticizers in the rubber composition are the modified resin of the modified polymer extended rubber, the oil, and the thermoplastic elastomer.

In the rubber composition, the total amount of plasticizers per 100 parts by mass of the total rubber components in the rubber composition is preferably 20 parts by mass or more, more preferably 35 parts by mass or more, still more preferably 45 parts by mass or more, particularly preferably 55 parts by mass or more. The upper limit is preferably 120 parts by mass or less, more preferably 100 parts by mass or less, still more preferably 90 parts by mass or less, particularly preferably 85 parts by mass or less. When the amount is within the range indicated above, the advantageous effect tends to be better achieved.

In the rubber composition, the amount of liquid plasticizers per 100 parts by mass of the total rubber components in the rubber composition is preferably 50 parts by mass or less, more preferably 20 parts by mass or less, still more preferably 10 parts by mass or less, particularly preferably 5 parts by mass or less, and may be 0 parts by mass. When the amount is within the range indicated above, the advantageous effect tends to be better achieved. It should be noted that the amount of liquid plasticizers includes the amount of the oils contained in the oil extended rubbers, if used.

Examples of plasticizers include the modified polymers (the modified resins, the modified thermoplastic elastomers) described above. Other plasticizers include oils.

Examples of the oils include process oils, plant oils, and mixtures thereof. Examples of the process oils include paraffinic process oils, aromatic process oils, and naphthenic process oils. Examples of the plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Process oils (e.g., paraffinic process oils, aromatic process oils, naphthenic process oils) or plant oils are preferred among these.

In the rubber composition, the amount of oils per 100 parts by mass of the total rubber components in the rubber composition is preferably 50 parts by mass or less, more preferably 20 parts by mass or less, still more preferably 10 parts by mass or less, particularly preferably 5 parts by mass or less, and may be 0 parts by mass. When the amount is within the range indicated above, the advantageous effect tends to be better achieved. It should be noted that the amount of oils includes the amount of the oils contained in the oil extended rubbers, if used.

The liquid plasticizers and solid plasticizers may be commercially available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

(Other components in rubber composition)

From the standpoint of properties such as cracking resistance and ozone resistance, the rubber composition preferably contains an antioxidant.

Any antioxidant may be used. Examples include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Preferred among these are p-phenylenediamine or quinoline antioxidants, with N-(1,3-dimethylbutyl)-N'-phenyl-p-phenylenediamine or polymerized 2,2,4-trimethyl-1,2-dihydroquinoline being more preferred. Usable commercial products

are available from Seiko Chemical Co., Ltd., Sumitomo Chemical Co., Ltd., Ouchi Shinko Chemical Industrial Co., Ltd., Flexsys, etc.

In the rubber composition, the amount of antioxidants per 100 parts by mass of the total rubber components in the rubber composition is preferably 0.2 parts by mass or more, more preferably 0.5 parts by mass or more. When the amount is not less than the lower limit, sufficient ozone resistance tends to be obtained. The amount is preferably 7.0 parts by mass or less, more preferably 4.0 parts by mass or less. When the amount is not more than the upper limit, a good appearance tends to be obtained.

The rubber composition may contain stearic acid. In the rubber composition, the amount of stearic acid per 100 parts by mass of the total rubber components in the rubber composition is preferably 0.5 to 10 parts by mass, more preferably 0.5 to 5 parts by mass.

The stearic acid may be conventional ones, e.g., available from NOF Corporation, Kao Corporation, FUJIFILM Wako Pure Chemical Corporation, or Chiba Fatty Acid Co., Ltd.

The rubber composition may contain zinc oxide. In the rubber composition, the amount of zinc oxide per 100 parts by mass of the total rubber components in the rubber composition is preferably 0.5 to 10 parts by mass, more preferably 1 to 5 parts by mass.

The zinc oxide may be conventional ones, e.g., available from Mitsui Mining & Smelting Co., Ltd., Toho Zinc Co., Ltd., HakusuiTech Co., Ltd., Seido Chemical Industry Co., Ltd., or Sakai Chemical Industry Co., Ltd.

The rubber composition may contain a wax. In the rubber composition, the amount of waxes per 100 parts by mass of the total rubber components in the rubber composition is preferably 0.5 to 10 parts by mass, more preferably 1 to 5 parts by mass.

Any wax may be used, and examples include petroleum waxes and natural waxes, as well as synthetic waxes prepared by purifying or chemically treating a plurality of waxes. These waxes may be used alone or in combinations of two or more.

Examples of the petroleum waxes include paraffin waxes and microcrystalline waxes. The natural waxes may be any wax derived from non-petroleum resources, and examples include plant waxes such as candelilla wax, carnauba wax, Japan wax, rice wax, and jojoba wax; animal waxes such as beeswax, lanolin, and spermaceti; mineral waxes such as ozokerite, ceresin, and petrolatum; and purified products of the foregoing. Usable commercial products are available from Ouchi Shinko Chemical Industrial Co., Ltd., Nippon Seiro Co., Ltd., Seiko Chemical Co., Ltd., etc.

The rubber composition may contain sulfur to moderately crosslink the polymer chains, thereby providing a good balance of the properties.

In the rubber composition, the amount of sulfur per 100 parts by mass of the total rubber components in the rubber composition is preferably 0.1 parts by mass or more, more preferably 0.5 parts by mass or more, still more preferably 0.7 parts by mass or more. The amount is preferably 6.0 parts by mass or less, more preferably 4.0 parts by mass or less, still more preferably 3.0 parts by mass or less.

Examples of the sulfur include those commonly used in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc. These may be used alone or in combinations of two or more.

The rubber composition may contain a vulcanization accelerator.

In the rubber composition, the amount of vulcanization accelerators per 100 parts by mass of the total rubber components in the rubber composition is usually 0.3 to 10 parts by mass, preferably 0.5 to 7 parts by mass.

Any type of vulcanization accelerator may be used, including those usually used. Examples of vulcanization accelerators include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. From the standpoint of the balance of the properties, sulfenamide and/or guanidine vulcanization accelerators are preferred among these.

The rubber composition may contain any other appropriate additive usually used in the application field, such as a release agent or a pigment, in addition to the above-mentioned components.

The rubber composition may be prepared by known methods. For example, it may be prepared for example by kneading the components in a rubber kneading machine such as an open roll mill or a Banbury mixer, optionally followed by crosslinking. The kneading conditions include a kneading temperature of usually 50 to 200°C, preferably 80 to 190°C, and a kneading time of usually 30 seconds to 30 minutes, preferably one minute to 30 minutes.

The rubber composition may be used in any tire component, suitably a tread (cap tread).

The rubber composition is suitable for use in a tire. Examples of the tire include pneumatic tires and nonpneumatic tires, with pneumatic tires being preferred among these. In particular, the tire may be suitably used as a summer tire, winter tire (e.g., studless winter tire, cold weather tire, snow tire, or studded tire), or all-season tire, for example. The tire may be used as a tire for passenger vehicles, large passenger vehicles, large SUVs, heavy duty vehicles such as trucks and buses, light trucks, or motorcycles, or as a racing tire (high performance tire), for example. The tire is especially suitable for passenger vehicles or light trucks.

The tire may be produced from the rubber composition by usual methods. For example, the rubber composition containing materials such as the modified polymer extended rubber, before vulcanization, may be extruded into the shape of a tire component and assembled with other tire components on a tire building machine in a usual manner to build an unvulcanized tire, followed by heating and pressurizing it in a vulcanizer to produce a tire.

A suitable example of the tire may be a tire including a tread rubber layer in which the tread rubber layer at least includes an outward tread rubber layer provided outward with respect to the tire, and an inward tread rubber layer provided radially inward (with respect to the tire) from the outward tread rubber layer, the outward tread rubber layer includes the above-described rubber composition, and the inward tread rubber layer includes a rubber composition different from the rubber composition.

The following describes an example of a preferred embodiment of the tire with reference to the figures. Fig. 1 illustrates a cross-sectional view of a part of a passenger vehicle tire according to one embodiment of the present disclosure. Although Fig. 1 illustrates a passenger vehicle tire, the present disclosure is applicable to the above-mentioned other tires.

In Fig. 1, the vertical direction is the radial direction of the tire; the horizontal direction is the axial direction of the tire; and the direction perpendicular to the plane of the paper is the circumferential direction of the tire. The passenger vehicle tire 1 includes a tread portion 7, a pair of sidewall portions 8 extending radially inwardly from each end of the tread portion 7, bead portions 3 located at an inward end of each sidewall 8, and chafers 2 located on top of a rim. Moreover, a carcass 10 extends between the bead portions 3 on opposite sides, and a breaker portion 9 is disposed radially outward from the carcass 10.

The carcass 10 is formed of at least one carcass ply in which carcass cords are arranged. The carcass ply extends from the tread portion 7 via the sidewall portion 8 and then is turned up around a bead core 4 and a bead apex 5 extending from the upper end of the bead core 4 toward the sidewall, from the inside to the outside in the tire axial direction, and finally anchored by the turn-up. The breaker portion 9 is composed of two or more breaker plies in which breaker cords are arranged. The breaker cords are arranged in different orientations so that the breaker cords in one breaker ply cross those in another breaker ply. A band 6 is provided above the breaker portion 9 to protect the breaker portion 9.

The tread portion 7 includes an outward tread rubber layer 7c provided on the road-contacting side, and an inward tread rubber layer 7b provided radially inward from the outward tread rubber layer 7c. Although Fig. 1 shows an example of a two-layered tread consisting of the outward tread rubber layer 7c and the inward tread rubber layer 7b, this is applicable to any multilayered tread, including, in addition to the two-layered tread, a three-layered tread and four- or more layered treads.

Preferred embodiments of multilayer tread structures in suitable examples of the tire include: a two-layered tread embodiment in which the outward tread rubber layer forms an outermost surface layer (first layer) of the two-layered tread, and the inward tread rubber layer forms a second layer adjacently provided radially inward from the outermost surface layer; a three-layered tread embodiment in which the outward tread rubber layer forms an outermost surface layer (first layer) of the three-layered tread, a rubber layer different from the outward tread rubber layer and the inward tread rubber layer forms a second layer adjacently provided radially inward from the outermost surface layer, and the inward tread rubber layer forms a third layer (innermost layer among the tread rubber layers) adjacently provided radially inward from the second layer; and a three-layered tread embodiment in which a rubber layer different from the outward tread rubber layer and the inward tread rubber layer forms an outermost surface layer (first layer) of the three-layered tread, the outward tread rubber layer forms a second layer adjacently provided radially inward from the outermost surface layer, and the inward tread rubber layer forms a third layer (innermost layer among the tread rubber layers) adjacently provided radially inward from the second layer.

In the tire 1 including a two-layered tread in Fig. 1, the outward tread rubber layer 7c is formed of a rubber composition for an outward tread rubber layer which includes the above-described rubber composition containing a modified polymer extended rubber, while the inward tread rubber layer 7b is formed of a rubber composition for an inward tread rubber layer which includes a rubber composition different from the rubber composition for an outward tread rubber layer.

For example, rubber components, fillers, plasticizers (e.g., the above-described modified resins and thermoplastic elastomers), and other components (e.g., antioxidants) as described for the above-described rubber composition may be used in the rubber composition for an inward tread rubber layer.

In the rubber composition for an inward tread rubber layer, the amount of isoprene-based rubbers based on

100% by mass of the total rubber components in the rubber composition for an inward tread rubber layer is preferably 30% by mass or more, more preferably 50% by mass or more, still more preferably 60% by mass or more. When the amount is within the range indicated above, the advantageous effect tends to be better achieved.

In the rubber composition for an inward tread rubber layer, the nitrogen adsorption specific surface area ($N_2SA$) of the carbon black is preferably 50 $m^2/g$ or more, more preferably 60 $m^2/g$ or more. The $N_2SA$ is preferably 200 $m^2/g$ or less, more preferably 180 $m^2/g$ or less, still more preferably 150 $m^2/g$ or less. When the $N_2SA$ is within the range indicated above, the advantageous effect tends to be better achieved.

In the rubber composition for an inward tread rubber layer, the amount of carbon black per 100 parts by mass of the total rubber components in the rubber composition for an inward tread rubber layer is preferably 1 part by mass or more, more preferably 2 parts by mass or more, still more preferably 3 parts by mass or more. The amount is preferably 150 parts by mass or less, more preferably 100 parts by mass or less, still more preferably 80 parts by mass or less. When the amount is within the range indicated above, the advantageous effect tends to be better achieved.

The amount of plasticizers and the amounts of other components (e.g., the amount of antioxidants) in the rubber composition for an inward tread rubber layer may be appropriately selected and may be in the ranges as described for the above-described rubber composition, for example.

In particular, in both the rubber composition for an outward tread rubber layer of the outward tread rubber layer and the rubber composition for an inward tread rubber layer of the inward tread rubber layer, the amount of liquid plasticizers per 100 parts by mass of the total rubber components in each rubber composition is preferably 50 parts by mass or less, more preferably 20 parts by mass or less, still more preferably 10 parts by mass or less, and may be 0 parts by mass. The lower limit is not limited and may be 1 part by mass or more, or 3 parts by mass or more. When the amount is within the range indicated above, the advantageous effect tends to be better achieved. It should be noted that the amount of liquid plasticizers includes the amount of the oils contained in the oil extended rubbers, if used.

EXAMPLES

The present disclosure will be specifically described with reference to, but not limited to, examples.

The following describes the chemicals used in the production examples.

SBR 1 to SBR 3 and BR 1: prepared in Production Examples 1-1 and 1-2 below
Hydrogenated SBR: prepared in Production Example 1-3 below
DCPD (unhydrogenated): Oppera PR 383 (DCPD resin, softening point: 103°C) available from ExxonMobil Corporation
Hydrogenated DCPD: Oppera PR 100 (hydrogenated DCPD resin, softening point: 140°C) available from ExxonMobil Corporation
$C_5/C_9$ resin: PD104 (softening point: 103°C) available from ENEOS Corporation
$C_9$ resin: SYLVARES SA85 (a-methylstyrene resin, a copolymer of $\alpha$-methylstyrene and styrene, softening point: 85°C) available from Arizona Chemical
Allyltriethoxysilane
3-Aminopropyltriethoxysilane
N-acetylethylenediamine
4-Pyrrolidinylethylstyrene
Modified resins 1 to 5: prepared in Production Examples 2-1 to 2-5 below
Modified TPE: prepared in Production Example 2-6 below

(Production Example 1-1: Production of SBR 1 (modified SBR))

An amount of 547 g of 1,3-butadiene, 173 g of styrene, 6.1 mL of tetrahydrofuran, and 5.0 mL of ethylene glycol diethyl ether were introduced into a methylcyclohexane solvent in a nitrogen-purged polymerization reaction vessel, and then a solution of 13.1 mmol of n-butyllithium in n-hexane was introduced to perform polymerization. Then, 11.1 mmol of 3-diethylaminopropyltriethoxysilane was added to obtain SBR 1 terminated with an aminoalkoxysilyl modifier group as shown in Table 1.

(Production Example 1-2: Production of SBR 2 to 3 (modified SBR) and BR 1 (modified BR))

SBR 2 to 3 (modified SBR) and BR 1 (modified BR) shown in Table 1 were produced as in the production of SBR 1 (modified SBR).

(Production Example 1-3: Production of hydrogenated SBR)

A hydrogenated SBR was produced using the same recipe as SBR 1, except that the polymer obtained in the production of SBR 1 (modified SBR) was hydrogenated. Specifically, after the polymerization conversion reaction described for SBR 1, the polymerization reaction was not terminated by adding ethanol. Instead, the reaction solution was then stirred for 20 minutes while supplying hydrogen gas at a pressure of 0.4 MPa gauge to react the unreacted polymer terminal lithium with hydrogen into lithium hydride. Hydrogenation was performed using a titanocene dichloride-based catalyst at a hydrogen gas supply pressure of 0.7 MPa gauge and a reaction temperature of 90°C. Once the cumulative amount of absorbed hydrogen reached the amount corresponding to the target degree of hydrogenation, the reaction temperature was brought to room temperature and the hydrogen pressure was returned to an ordinary pressure. Then, the reaction solution was drawn from the reaction vessel and introduced into water with stirring, and the solvent was removed by steam stripping to obtain a hydrogenated SBR (modified hydrogenated SBR) as shown in Table 1.

[Table 1]

| | Styrene content (% by mass) | Vinyl content (% by mass) | Modifier group/ Modification position | Tg (°C) | Mn |
|---|---|---|---|---|---|
| SBR1 | 24 | 22 | Aminoalkoxysilylgroup/ Chain end | -45 | 200, 000 |
| SBR 2 | 15 | 25 | Aminoalkoxysilyl group/ Main chain | -65 | 450, 000 |
| SBR 3 | 3 | 12 | Aminoalkoxysilyl group/ Chain end | -89 | 400,000 |
| BR 1 | 0 | 1 | Alkoxysilyl group/Chain end | -109 | 300. 000 |
| Hydrogenated SBR (Degree of hydrogenation of double bonds: 97 mol%) | 24 | 0 | Alkoxysilyl group/Chain end | -50 | 500, 000 |

(Production Example 2-1: Production of modified resin 1)

Modified resin 1 as shown in Table 2 was produced by adding allyltriethoxysilane to DCPD (unhydrogenated).

(Production Example 2-2: Production of modified resin 2)

Modified resin 2 as shown in Table 2 was produced by reacting hydrogenated DCPD with aminopropyltriethoxysilane.

(Production Example 2-3: Production of modified resin 3)

Modified resin 3 as shown in Table 2 was produced by reacting a $C_5/C_9$ resin with aminopropyltriethoxysilane.

(Production Example 2-4: Production of modified resin 4)

Modified resin 4 as shown in Table 2 was produced by reacting a $C_5/C_9$ resin with acetylethylenediamine.

(Production Example 2-5: Production of modified resin 5)

Modified resin 5 as shown in Table 2 was produced by reacting a $C_9$ resin with pyrrolidinylethylstyrene.

(Production Example 2-6: Production of modified TPE)

An autoclave equipped with a stirrer and a jacket was washed, dried, and purged with nitrogen. A cyclohexane

solution containing 10 parts by mass of previously purified styrene (concentration: 20% by mass) was introduced into the autoclave. Then, n-butyllithium and tetramethylethylenediamine were added, and polymerization was performed at 70°C for one hour. Subsequently, a cyclohexane solution containing 80 parts by mass of previously purified butadiene (concentration: 20% by mass) was added, and polymerization was performed at 70°C for one hour. Then, a cyclohexane solution containing 10 parts by mass of styrene (concentration: 20% by mass) was added, and polymerization was performed at 70°C for one hour, followed by a reaction with aminopropyltriethoxysilane as a modifier in an equimolar amount to the n-butyllithium used in the polymerization. Thereafter, an alcohol was added to terminate the reaction, and 1 g of 2,6-tert-butyl-p-cresol was added to the reaction solution, followed by purification by reprecipitation to obtain a modified styrene-butadiene block copolymer (modified thermoplastic elastomer (modified TPE)) as shown in Table 2.

[Table 2]

| | Backbone resin/TPE | Modifier group | Modified compound |
|---|---|---|---|
| Modified resin 1 | DCPD | Alkoxysilyl group | Allyltriethoxysilane |
| Modified resin 2 | Hydrogenated DCPD | Aminoalkoxysilyl group | 3-Aminopropyltriethoxysilane |
| Modified resin 3 | C5/C9 resin | Aminoalkoxysilyl group | 3-Aminopropyltriethoxysilane |
| Modified resin 4 | C5/C9 resin | Amino group | N-Acetylethylenediamine |
| Modified resin 5 | C9 resin | Amino group | 4-Pyrrolidinylethylstyrene |
| Modified TPE | Styrene-butadiene block copolvmer (TPE) | Aminoalkoxysilyl group | 3-Aminopropyltriethoxysilane |

(Production Example 3-1: Production of modified polymer extended rubber 1)

To the SBR 1 solution obtained in Production Example 1-1 was added a solution of modified resin 1 (360 g) separately prepared in Production Example 2-1 in methylcyclohexane, and they were well mixed. Then, the solvent was removed to obtain modified polymer extended rubber 1 (MB 1 (SBR 1/modified resin 1 = 100/50)).

(Production Example 3-2: Production of modified polymer extended rubbers 2 to 9)

Modified polymer extended rubbers 2 to 9 (MB 2 to MB 9) were prepared according to Table 3 as in Production Example 3-1.

[Table 3]

| | Rubber component (Amount by parts) | Modified resin/Modified TPE (Amount by parts) |
|---|---|---|
| MB 1 | SBR 1 (100 parts by mass) | Modified resin 1 (50 parts by mass) |
| MB 2 | SBR 2 (100 parts by mass) | Modified resin 2 (50 parts by mass) |
| MB 3 | SBR 3 (100 parts by mass) | Modified resin 3 (50 parts by mass) |
| MB 4 | SBR 3 (100 parts by mass) | Modified resin 5 (50 parts by mass) |
| MB 5 | BR 1 (100 parts by mass) | Modified resin 4 (50 parts by mass) |
| MB 6 | Hydrogenated SBR (100 parts by mass) | Modified resin 2 (50 parts by mass) |
| MB 7 | SBR 3 (100 parts by mass) | Modified TPE (50 parts by mass) |
| MB 8 | SBR 3 (100 parts by mass) | Modified TPE (30 parts by mass) |
| MB 9 | SBR 3 (100 parts by mass) | Modified TPE (90 parts by mass) |

The following describes the chemicals used in the examples and comparative example.

(Cap tread)

MB 1 to MB 7: prepared in Production Examples 3-1 and 3-2 above
BR 2: BR150B (cis content: 97% by mass, Tg: -110°C) available from Ube Industries, Ltd.
NR: TSR20 (Tg: -62°C)
SBR 1: prepared in Production Example 1-1 above
Silica 1: Ultrasil VN3 ($N_2SA$: 175 $m^2/g$) available from Evonik Degussa
Silica 2: Zeosil Premium 200 MP ($N_2SA$: 220 $m^2/g$) available from Rhodia
Silica 3: Premium SW ($N_2SA$: 275 $m^2/g$) available from Solvay
Silane coupling agent 1: Si266 (bis(3-triethoxysilylpropyl)disulfide) available from Evonik Degussa
Silane coupling agent 2: Si69 (bis(3-triethoxysilylpropyl)tetrasulfide) available from Evonik Degussa
Silane coupling agent 3: NXT silane (3-octanoylthiopropyltriethoxysilane) available from Momentive
Carbon black: DIABLACK A (N110, $N_2SA$: 142 $m^2/g$, DBP: 116 ml/100 g) available from Mitsubishi Chemical Corporation
Hydrogenated DCPD: Escorez 5320 (hydrogenated DCPD resin) available from Exxon Mobil Corporation
DCPD (unhydrogenated): the above DCPD resin available from Exxon Mobil Corporation
Oil: VIVATEC 500 (TDAE oil) available from H&R
Stearic acid: stearic acid beads TSUBAKI available from NOF Corporation
Zinc oxide: zinc oxide #2 available from Mitsui Mining & Smelting Co., Ltd.
Sulfur: powdered sulfur available from Tsurumi Chemical Industry Co., Ltd.
Vulcanization accelerator 1: NOCCELER D (N,N'-diphenylguanidine (DPG)) available from Ouchi Shinko Chemical Industrial Co., Ltd.
Vulcanization accelerator 2: NOCCELER CZ (N-cyclohexyl-2-benzothiazolylsulfenamide) available from Ouchi Shinko Chemical Industrial Co., Ltd.
Antioxidant: NOCRAC 6C (N-(1,3-dimethylbutyl)-N'-phenyl-p-phenylenediamine) available from Ouchi Shinko Chemical Industrial Co., Ltd.

(Base tread)

NR: TSR20
BR: BR150B (cis content: 97% by mass) available from Ube Industries, Ltd.
Carbon black: SHOBLACK N330 ($N_2SA$: 75 $m^2/g$) available from Cabot Japan K.K.
Oil: Diana Process AH-24 available from Idemitsu Kosan Co., Ltd.
Antioxidant: NOCRAC 6C (N-phenyl-N'-(1,3-dimethylbutyl)-p-phenylenediamine, 6PPD) available from Ouchi Shinko Chemical Industrial Co., Ltd.
Stearic acid: stearic acid beads TSUBAKI available from NOF Corporation
Zinc oxide: zinc oxide #2 available from Mitsui Mining & Smelting Co., Ltd.
Sulfur: Seimi sulfur (oil content: 10%) available from Nippon Kanryu Industry Co., Ltd.
Vulcanization accelerator TBBS: NOCCELER NS available from Ouchi Shinko Chemical Industrial Co., Ltd.

<Examples and Comparative Example>

(Tire production)

The materials shown in Table 4 other than the sulfur, vulcanization accelerators, and antioxidant in the formulation amounts indicated in Table 4 were kneaded at 150°C for five minutes using a 1.7 L Banbury mixer (Kobe Steel, Ltd.) to give a kneaded mixture. Then, the sulfur, vulcanization accelerators, and antioxidant were added to the kneaded mixture, and they were kneaded at 80°C for five minutes using an open roll mill to obtain an unvulcanized rubber composition.

The unvulcanized rubber composition was formed into the shape of a cap tread and assembled with a base tread having the formulation shown in Table 5 and other tire components on a tire building machine to build an unvulcanized tire. The unvulcanized tire was vulcanized at 170°C for 10 minutes to prepare a test tire (size: 195/65R15, passenger vehicle tire).

The test tires prepared as above were evaluated as described below. Table 4 shows the results. It should be

noted that Comparative Example 1 is used as a standard of comparison in Table 4.

(Evaluation)

(Abrasion resistance)

The test tires were mounted on a front-engine, frontwheel-drive car of 2000 cc displacement made in Japan. After the car was driven 5000 km at a speed of 100 to 150 km/h, the groove depth in the tire tread portion was measured. The distance at which the tire groove depth decreased by 1 mm was calculated and expressed as an index using the equation below. A higher index indicates better abrasion resistance.

Abrasion resistance index = (Distance at which groove depth of each tire decreased by 1 mm)/(Distance at which groove depth of tire of standard comparative example decreased by 1 mm) × 100

(Rubber strength)

The tires after the abrasion resistance test were observed for the occurrence of chipping or tread separation. The results are expressed as an index relative to those of the standard comparative example taken as 100. A higher index indicates better rubber strength.

(Wet grip performance)

The test tires were mounted on a front-engine, frontwheel-drive car of 2000 cc displacement made in Japan. The car was driven on a wet road with a surface temperature of 25°C at the Asahikawa Tire Proving Ground in Hokkaido, Japan. The stopping distance required for the car to stop after the brakes that lock up were applied at 100 km/h was measured and expressed as an index using the equation below, where the stopping distance of the standard comparative example is taken as 100. A higher index indicates better wet grip performance (wet braking performance).

(Wet grip performance index) = (Stopping distance of standard comparative example)/(Stopping distance of each formulation example) × 100

(High-speed wet grip performance)

The test tires were mounted on a front-engine, frontwheel-drive car of 2000 cc displacement made in Japan. The car was driven on a wet road with a surface temperature of 25°C at the Asahikawa Tire Proving Ground in Hokkaido, Japan. The stopping distance required for the car to stop after the brakes that lock up were applied at 150 km/h was measured and expressed as an index using the equation below, where the stopping distance of the standard comparative example is taken as 100. A higher index indicates better high-speed wet grip performance (wet braking performance at high speed).

(High-speed wet grip performance index) = (Stopping distance of standard comparative example)/(Stopping distance of each formulation example) × 100

(Fuel economy)

The test tires were mounted on a front-engine, front-wheel-drive car of 2000 cc displacement made in Japan. The car was driven on a dry road with a surface temperature of 25°C at the Okayama Tire Proving Ground in Japan. The distance required for the car to stop after the accelerator pedal was released at 60 km/h was measured and expressed

as an index using the equation below, where the distance of the standard comparative example is taken as 100. A higher index indicates better fuel economy.

$$(\text{Fuel economy index}) = (\text{Distance of each formulation example})/(\text{Distance of standard comparative example}) \times 100$$

[Table 4]

Cap tread formulation

| | | Example | | | | | | | | | | | | | | Comparative Example |
|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 1 |
| Formulation (parts by mass) | MB 1 (SBR 1/Modified resin 1 = 100/50) | 150 | 150 | | | | | 105 | | 105 | | | | | | |
| | MB 2 (SBR 2/Modified resin 2 = 100/50) | | | 150 | | | | | | | | | | | | |
| | MB 3 (SBR 3/Modified resin 3 = 100/50) | | | | 150 | | | | | | | | | | | |
| | MB 4 (SBR 3/Modified resin 5 = 100/50) | | | | | 150 | | | | | | | | | | |
| | MB 5 (BR 1/Modified resin 4 = 100/50) | | | | | | 150 | | 150 | | | | | | | |
| | MB 6 (Hydrogenated SBR/Modified resin 2 = 100/50) | | | | | | | | | | 150 | | | | | |
| | MB 7 (SBR 3/Modified TPE = 100/50) | | | | | | | | | | | 150 | 150 | | | |
| | MB 8 (SBR 3/Modified TPE = 100/30) | | | | | | | | | | | | | 130 | | |
| | MB 9 (SBR 3/Modified TPE = 100/90) | | | | | | | | | | | | | | 190 | |
| | BR 2 | | | | | | | 30 | | 20 | | | | | | |
| | NR | | | | | | | | | 10 | | | | | | |
| | SBR 1 | | | | | | | | | | | | | | | 100 |
| | Silica 1 | 80 | 80 | | | | | 130 | | 120 | 130 | | | | | 80 |
| | Silica 2 | | | 100 | 100 | 120 | 120 | | 150 | | | 130 | | | | |
| | Silica 3 | | | | | | | | | | | | 130 | 130 | 130 | |
| | Silane coupling agent 1 | 6.4 | | | | | | | | | | | | | | 6.4 |
| | Silane coupling agent 2 | | 6.4 | | | | | | | | | | | | | |
| | Silane coupling agent 3 | | | 10 | 10 | 12 | 12 | 10.4 | 15 | 9.6 | 10.4 | 13 | 13 | 13 | 13 | |
| | Carbon black | 5 | 5 | 5 | 5 | 5 | 5 | 5 | 5 | 5 | 5 | 5 | 5 | 5 | 5 | 5 |
| | Hydrogenated DCPD | | | | | | 20 | 15 | 40 | 25 | 30 | | | | | |
| | DCPD (unhydrogenated) | | | | | | | | | | | | | | | 50 |
| | Oil | 5 | 5 | 3 | | | | 30 | | 5 | 5 | 5 | 5 | 5 | 5 | 5 |
| | Stearic acid | 2 | 2 | 2 | 2 | 2 | 2 | 2 | 2 | 2 | 2 | 2 | 2 | 2 | 2 | 2 |
| | Zinc oxide | 2 | 2 | 2 | 2 | 2 | 2 | 2 | 2 | 2 | 2 | 2 | 2 | 2 | 2 | 2 |
| | Sulfur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Vulcanization accelerator 1 | 2 | 2 | 2 | 2 | 2 | 2 | 2 | 2 | 2 | 2 | 2 | 2 | 2 | 2 | 2 |
| | Vulcanization accelerator 2 | 2 | 2 | 2 | 2 | 2 | 2 | 2 | 2 | 2 | 2 | 2 | 2 | 2 | 2 | 2 |
| | Antioxidant | 2 | 2 | 2 | 2 | 2 | 2 | 2 | 2 | 2 | 2 | 2 | 2 | 2 | 2 | 2 |
| Evaluation | (a) Abrasion resistance | 110 | 105 | 115 | 115 | 125 | 125 | 120 | 135 | 125 | 125 | 140 | 145 | 145 | 140 | 100 |
| | (b) Rubber strength | 117 | 100 | 133 | 133 | 150 | 133 | 133 | 167 | 133 | 150 | 150 | 167 | 150 | 150 | 100 |
| | (c) Wet grip performance | 110 | 105 | 110 | 105 | 105 | 105 | 105 | 110 | 105 | 115 | 125 | 130 | 125 | 135 | 100 |
| | (d) High-speed wet grip performance | 105 | 105 | 105 | 100 | 105 | 105 | 110 | 120 | 105 | 110 | 120 | 135 | 130 | 140 | 100 |
| | (e) Fuel economy | 110 | 110 | 100 | 100 | 100 | 100 | 105 | 100 | 110 | 105 | 105 | 100 | 105 | 100 | 100 |
| | Overall performance (= (a)+(b)+(c)+(d)+(e)) | 552 | 525 | 563 | 553 | 585 | 568 | 573 | 632 | 578 | 605 | 640 | 677 | 655 | 665 | 500 |

[Table 5]

| Base tread formulation (parts by mass) | |
|---|---|
| NR | 70 |
| BR | 30 |
| Carbon black | 40 |
| Oil | 5 |
| Antioxidant | 2 |
| Stearic acid | 2 |
| Zinc oxide | 2 |
| Sulfur | 2 |
| Vulcanization accelerator TBBS | 1 |

Table 4 shows that excellent overall performance in terms of abrasion resistance, rubber strength, wet grip performance, high-speed wet grip performance, and fuel economy (expressed by the sum of the five indices of abrasion resistance, rubber strength, wet grip performance, high-speed wet grip performance, and fuel economy) was exhibited by the tires of the examples using a rubber composition containing a modified polymer extended rubber obtained by extending a rubber component A with at least one modified polymer selected from the group consisting of a modified resin containing a functional group having affinity for silica and a modified thermoplastic elastomer containing a functional group having affinity for silica.

REFERENCE SIGNS LIST

1 passenger vehicle tire
2 chafer
3 bead portion
4 bead core
5 bead apex
6 band
7 tread portion
7b inward tread rubber layer
7c outward tread rubber layer
8 sidewall portion
9 breaker portion
10 carcass

## Claims

1. A tire, comprising a rubber composition comprising a modified polymer extended rubber,
the modified polymer extended rubber being obtained by extending a rubber component A with at least one modified polymer selected from the group consisting of a modified resin containing a functional group having affinity for silica and a modified thermoplastic elastomer containing a functional group having affinity for silica.

2. The tire according to claim 1,
wherein the rubber component A has a number average molecular weight of 150,000 or more.

3. The tire according to claim 1 or 2,
wherein the functional group is at least one selected from the group consisting of: a group represented by SiOR wherein R represents a hydrogen atom or a hydrocarbon group; an alkoxysilyl group; an amino group; a hydroxy group; an epoxy group; and a carboxyl group, each of which may be substituted.

**4.** The tire according to any one of claims 1 to 3,
wherein the rubber component A has a glass transition temperature of -10°C or lower.

**5.** The tire according to any one of claims 1 to 4,
wherein a backbone resin of the modified resin is at least one selected from the group consisting of $C_5$ resins, $C_5/C_9$ resins, $C_9$ resins, terpene resins, terpene-aromatic compound resins, rosin resins, dicyclopentadiene resins, and alkylphenol resins.

**6.** The tire according to any one of claims 1 to 5,
wherein a backbone thermoplastic elastomer of the modified thermoplastic elastomer has an aromatic vinyl monomer block.

**7.** The tire according to any one of claims 1 to 6,
wherein the rubber component A comprises a modified rubber containing a functional group having affinity for silica.

**8.** The tire according to any one of claims 1 to 7,
wherein the rubber component A comprises at least one selected from the group consisting of styrene-butadiene rubbers and polybutadiene rubbers.

**9.** The tire according to any one of claims 1 to 8,
wherein the modified polymer extended rubber is prepared by producing the rubber component A by polymerization in an organic solvent, and adding a solution of the modified resin and/or the modified thermoplastic elastomer to the resulting polymerization solution.

**10.** The tire according to any one of claims 1 to 9,
wherein the rubber composition has a liquid plasticizer content of 20 parts by mass or less per 100 parts by mass of the total rubber components.

**11.** The tire according to any one of claims 1 to 9,
wherein the rubber composition has a liquid plasticizer content of 10 parts by mass or less per 100 parts by mass of the total rubber components.

**12.** The tire according to any one of claims 1 to 11,
wherein the rubber composition has a silica content of 30 parts by mass or more per 100 parts by mass of the total rubber components.

**13.** The tire according to any one of claims 1 to 11,
wherein the rubber composition has a silica content of 80 parts by mass or more per 100 parts by mass of the total rubber components.

**14.** The tire according to any one of claims 1 to 13,

wherein the tire comprises tread rubber layers,
the tread rubber layers at least comprise:

an outward tread rubber layer provided outward with respect to the tire; and
an inward tread rubber layer provided radially inward from the outward tread rubber layer,
the outward tread rubber layer comprises the rubber composition, and
the inward tread rubber layer comprises a rubber composition different from the rubber composition.

**15.** The tire according to claim 14,
wherein the rubber composition of the outward tread rubber layer and the rubber composition of the inward tread rubber layer both have a liquid plasticizer content of 20 parts by mass or less per 100 parts by mass of the total rubber components.

## Patentansprüche

1. Reifen, umfassend eine Kautschukzusammensetzung, die einen mit modifiziertem Polymer verlängerten Kautschuk umfasst,
wobei der mit modifiziertem Polymer verlängerte Kautschuk erhalten ist durch Verlängern einer Kautschukkomponente A mit mindestens einem modifizierten Polymer, welches ausgewählt ist aus der Gruppe bestehend aus einem modifizierten Harz, das eine funktionelle Gruppe mit Affinität zu Siliciumdioxid enthält, und einem modifizierten thermoplastischen Elastomer, das eine funktionelle Gruppe mit Affinität zu Siliciumdioxid enthält.

2. Reifen nach Anspruch 1,
wobei die Kautschukkomponente A ein zahlenmittleres Molekulargewicht von 150.000 oder mehr aufweist.

3. Reifen nach Anspruch 1 oder 2,
wobei die funktionelle Gruppe mindestens eine ist, welche ausgewählt ist aus der Gruppe bestehend aus: einer durch SiOR dargestellten Gruppe, wobei R ein Wasserstoffatom oder eine Kohlenwasserstoffgruppe darstellt; einer Alkoxysilylgruppe; einer Aminogruppe; einer Hydroxygruppe; einer Epoxygruppe; und einer Carboxygruppe, wovon jede substituiert sein kann.

4. Reifen nach einem der Ansprüche 1 bis 3,
wobei die Kautschukkomponente A eine Glasübergangstemperatur von -10°C oder niedriger aufweist.

5. Reifen nach einem der Ansprüche 1 bis 4,
wobei ein Rückgrat-Harz des modifizierten Harzes mindestens eines ist, welches ausgewählt ist aus der Gruppe bestehend aus Cs-Harzen, $C_5$/$C_9$-Harzen, $C_9$-Harzen, Terpenharzen, Harzen von Terpenen und aromatischen Verbindungen, Kolophoniumharzen, Dicyclopentadienharzen und Alkylphenolharzen.

6. Reifen nach einem der Ansprüche 1 bis 5,
wobei ein thermoplastisches Rückgrat-Elastomer des modifizierten thermoplastischen Elastomers einen aromatischen Vinylmonomer-Block aufweist.

7. Reifen nach einem der Ansprüche 1 bis 6,
wobei die Kautschukkomponente A einen modifizierten Kautschuk umfasst, der eine funktionelle Gruppe mit Affinität zu Siliciumdioxid enthält.

8. Reifen nach einem der Ansprüche 1 bis 7,
wobei die Kautschukkomponente A mindestens einen umfasst, der aus der Gruppe bestehend aus Styrol-Butadien-Kautschuken und Polybutadien-Kautschuken ausgewählt ist.

9. Reifen nach einem der Ansprüche 1 bis 8,
wobei der mit modifiziertem Polymer verlängerte Kautschuk hergestellt ist durch Erzeugen der Kautschukkomponente A durch Polymerisation in einem organischen Lösungsmittel und Zugeben einer Lösung des modifizierten Harzes und/oder des modifizierten thermoplastischen Elastomers zu der entstandenen Polymerisationslösung.

10. Reifen nach einem der Ansprüche 1 bis 9,
wobei die Kautschukzusammensetzung einen Gehalt an flüssigem Weichmacher von 20 Massenteilen oder weniger pro 100 Massenteile der gesamten Kautschukkomponenten aufweist.

11. Reifen nach einem der Ansprüche 1 bis 9,
wobei die Kautschukzusammensetzung einen Gehalt an flüssigem Weichmacher von 10 Massenteilen oder weniger pro 100 Massenteile der gesamten Kautschukkomponenten aufweist.

12. Reifen nach einem der Ansprüche 1 bis 11,
wobei die Kautschukzusammensetzung einen Siliciumdioxid-Gehalt von 30 Massenteilen oder mehr pro 100 Massenteile der gesamten Kautschukkomponenten aufweist.

13. Reifen nach einem der Ansprüche 1 bis 11,
wobei die Kautschukzusammensetzung einen Siliciumdioxid-Gehalt von 80 Massenteilen oder mehr pro 100 Massenteile der gesamten Kautschukkomponenten aufweist.

**14.** Reifen nach einem der Ansprüche 1 bis 13,

wobei der Reifen Laufstreifenkautschukschichten umfasst,
die Laufstreifenkautschukschichten mindestens umfassen:

eine äußere Laufstreifenkautschukschicht, die bezogen auf den Reifen außen vorgesehen ist; und
eine innere Laufstreifenkautschukschicht, die radial innerhalb der äußeren Laufstreifenkautschukschicht vorgesehen ist,
die äußere Laufstreifenkautschukschicht die Kautschukzusammensetzung umfasst, und
die innere Laufstreifenkautschukschicht eine Kautschukzusammensetzung umfasst, die von der Kautschukzusammensetzung verschieden ist.

**15.** Reifen nach Anspruch 14,
wobei die Kautschukzusammensetzung der äußeren Laufstreifenkautschukschicht und die Kautschukzusammensetzung der inneren Laufstreifenkautschukschicht beide einen Gehalt an flüssigem Weichmacher von 20 Massenteilen oder weniger pro 100 Massenteile der gesamten Kautschukkomponenten aufweisen.

## Revendications

**1.** Pneu, comprenant une composition de caoutchouc comprenant un caoutchouc étendu à polymère modifié,
le caoutchouc étendu à polymère modifié étant obtenu en étendant un composant de caoutchouc A avec au moins un polymère modifié choisi dans le groupe constitué par une résine modifiée contenant un groupe fonctionnel ayant une affinité pour la silice et un élastomère thermoplastique modifié contenant un groupe fonctionnel ayant une affinité pour la silice.

**2.** Pneu selon la revendication 1,
dans lequel le composant de caoutchouc A a un poids moléculaire moyen en nombre de 150 000 ou plus.

**3.** Pneu selon la revendication 1 ou 2,
dans lequel le groupe fonctionnel est au moins un choisi dans le groupe constitué par : un groupe représenté par SiOR R, où R représente un atome d'hydrogène ou un groupe hydrocarbure ; un groupe alcoxysilyle ; un groupe amino ; un groupe hydroxy ; un groupe époxy ; et un groupe carboxyle, dont chacun peut être substitué.

**4.** Pneu selon l'une quelconque des revendications 1 à 3,
dans lequel le composant de caoutchouc A a une température de transition vitreuse de -10 °C ou moins.

**5.** Pneu selon l'une quelconque des revendications 1 à 4,
dans lequel une résine à squelette de la résine modifiée est au moins une choisie dans le groupe constitué par les résines Cs, les résines $C_5/C_9$, les résines Cs, les résines terpène, les résines terpène-composé aromatique, les résines rosine, les résines dicyclopentadiène et les résines alkylphénol.

**6.** Pneu selon l'une quelconque des revendications 1 à 5,
dans lequel un élastomère thermoplastique à squelette de l'élastomère thermoplastique modifié a une séquence de monomère vinyle aromatique.

**7.** Pneu selon l'une quelconque des revendications 1 à 6,
dans lequel le composant de caoutchouc A comprend un caoutchouc modifié contenant un groupe fonctionnel ayant une affinité pour la silice.

**8.** Pneu selon l'une quelconque des revendications 1 à 7,
dans lequel le composant de caoutchouc A comprend au moins un choisi dans le groupe constitué par les caoutchoucs de styrène-butadiène et les caoutchoucs de polybutadiène.

**9.** Pneu selon l'une quelconque des revendications 1 à 8,
dans lequel le caoutchouc étendu à polymère modifié est préparé par la production du composant A de caoutchouc par polymérisation dans un solvant organique et l'addition d'une solution de la résine modifiée et/ou de l'élastomère thermoplastique modifié à la solution de polymérisation résultante.

**10.** Pneu selon l'une quelconque des revendications 1 à 9,
dans lequel la composition de caoutchouc a une teneur en plastifiant liquide de 20 parties en masse ou moins par 100 parties en masse des composants de caoutchouc totaux.

**11.** Pneu selon l'une quelconque des revendications 1 à 9,
dans lequel la composition de caoutchouc a une teneur en plastifiant liquide de 10 parties en masse ou moins par 100 parties des composants de caoutchouc totaux.

**12.** Pneu selon l'une quelconque des revendications 1 à 11,
dans lequel la composition de caoutchouc a une teneur en silice de 30 parties en masse ou plus par 100 parties en masse de composants de caoutchouc totaux.

**13.** Pneu selon l'une quelconque des revendications 1 à 11,
dans lequel la composition de caoutchouc a une teneur en silice de 80 parties en masse ou plus par 100 parties en masse des composants de caoutchouc totaux.

**14.** Pneu selon l'une quelconque des revendications 1 à 13,

dans lequel le pneu comprend des couches de caoutchouc de bande de roulement,
les couches de caoutchouc de bande de roulement comprennent au moins :

une couche caoutchouc de bande de roulement externe fournie à l'extérieur par rapport au pneu ; et
une couche de caoutchouc de bande de roulement interne fournie radialement à l'intérieur de la bande de caoutchouc de bande de roulement externe ;
la couche de caoutchouc de bande de roulement externe comprend la composition de caoutchouc et
la couche de caoutchouc de bande de roulement interne comprend une composition de caoutchouc différente de la composition de caoutchouc.

**15.** Pneu selon la revendication 14,
dans lequel la composition de caoutchouc de la couche de caoutchouc de bande de roulement externe et la composition de caoutchouc de la couche de caoutchouc de la bande de roulement interne ont toutes les deux une teneur en plastifiant liquide de 20 parties en masse ou moins par 100 parties en masse des composants de caoutchouc totaux.

Fig. 1